# EUROPÄISCHE PATENTSCHRIFT

(11) **EP 3 379 001 B1**
(45) Veröffentlichungstag und Bekanntmachung des Hinweises auf die Patenterteilung: **08.01.2020**
(21) Anmeldenummer: 17162323.4
(22) Anmeldetag: 22.03.2017
(51) Int. Cl.: E04B 1/24, E04C 3/38, E04C 3/07, E04C 3/09, E04C 3/40, B21D 47/01, B23P 15/00, E04B 2/96, E04C 3/04, E04C 3/00

(54) **BELIEBIG GEKRÜMMTE TRAGSTRUKTUR**
ARBITRARILY CURVED SUPPORT STRUCTURE
STRUCTURE PORTANTE EN FORME COURBE QUELCONQUE

(43) Veröffentlichungstag der Anmeldung: 26.09.2018
(73) Patentinhaber: Marte and Marte Limited Zweigniederlassung Österreich, 6911 Lochau (AT)
(72) Erfinder: SUMMER, Marcel, 6850 Dornbirn (AT)
(74) Vertreter: Torggler & Hofinger Patentanwälte

(56) Entgegenhaltungen:
- WO-A1-02/18723
- DE-B- 1 271 350
- US-A1- 2004 069 755
- US-A1- 2005 115 192

## Beschreibung

Die Erfindung betrifft ein Verfahren zur Herstellung einer in einer dreidimensionalen, beliebig gekrümmten Geometrie verlaufenden Tragstruktur aus wenigstens einem ersten und einem zweiten flachen Materialstück, wobei die Geometrie Krümmungen in drei zueinander orthogonale Richtungen aufweist mit den Merkmalen des Oberbegriffs des Anspruchs 1 und ein Computerprogrammprodukt.

Gemäß dem oben definierten Verfahren hergestellte Tragstrukturen und gattungsgemäße Tragstrukturen allgemein können beispielsweise an Fassaden von Bauwerken montiert werden und Fassadenelemente tragen. Es handelt sich um Geometrien mit einem bevorzugt polygonalen Querschnitt, die sich (im Allgemeinen mit konstantem Querschnitt) je nach architektonischer Vorgabe mit freier Formgebung durch den Raum biegen können müssen. Schwierig konstruktiv zu lösen ist dabei insbesondere das erforderliche Tordieren der Geometrie um die eigene Achse.

Patentdokument US 2004/069755 A1 offenbart ein Verfahren mit den Schritten A, C und E des Anspruchs 1.

Aufgabe der Erfindung ist die Bereitstellung eines gattungsgemäßen Verfahrens, bei welchem auf einfache Weise in einer dreidimensionalen, beliebig gekrümmten Geometrie verlaufende Tragstrukturen hergestellt werden können und eines Computerprogrammprodukts.

Diese Aufgabe wird durch ein Verfahren mit den Merkmalen des Anspruchs 1 und ein Computerprogrammprodukt mit den Merkmalen des Anspruchs 7 gelöst. Vorteilhafte Ausführungsformen der Erfindung sind in den abhängigen Ansprüchen definiert.

Die Erfindung gestattet die Herstellung maßgenauer Tragstrukturen in einer dreidimensionalen, beliebig gekrümmten Geometrie. Bei der Geometrie kann es sich z. B. um eine Freiformgeometrie oder um eine Strahlgeometrie handeln. Auch eine Geometrie, die abschnittsweise als Freiformgeometrie und abschnittsweise als Strahlgeometrie ausgebildet ist, ist denkbar. Das Verbinden des wenigstens einen abgekanteten ersten Materialstückes und des wenigstens einen abgekanteten zweiten Materialstückes entlang der Verbindungsstellen ergibt automatisch und auf einfache und fehlerfreie Weise die gewünschte Geometrie. Es können beliebig lange Tragstrukturen gebaut werden. Die Tragstrukturen können bespannt oder beplankt werden oder auf andere Weise Fassadenelemente tragen.

Die in Anspruch 1 gewählte alphabetische Aufzählung von Schritten des erfindungsgemäßen Verfahrens ist nicht so zu verstehen, dass die Schritte zwingend gemäß der angeführten alphabetischen Reihenfolge durchgeführt werden müssten (obwohl die angegebene Reihenfolge natürlich möglich ist). Beispielsweise könnten die Schritte B und C oder D, E und F auch in beliebig geänderter Reihenfolge durchgeführt werden.

Die Erfindung wird beispielhaft anhand der Figuren diskutiert. Es zeigen:
- Fig. 1: eine Darstellung einer beispielhaften Geometrie
- Fig. 2: eine Approximation der Geometrie der Fig. 1 durch eine Vielzahl von polygonalen Querschnitten
- Fig. 3: ein Verbinden der Seitenlinien aufeinander folgender polygonaler Querschnitte durch Loftflächen
- Fig. 4: ein Aufteilen der Geometrie in einen ersten und einen zweiten Teil
- Fig. 5: ein Festlegen von Freistellungsbereichen angrenzender Loftflächen im Bereich jedes polygonalen Querschnitts
- Fig. 6: ein Festlegen einer Vielzahl von am ersten und zweiten Teil angeordneter Verbindungsstellen
- Fig. 7: ein Festlegen von zwischen den polygonalen Querschnitten verlaufenden Abkantkanten
- Fig. 8: das erste und zweite flache Materialstück und die Verbindungsstücke im zugeschnittenen Zustand
- Fig. 9: ein abgekantetes erstes Materialstück, ein abgekantetes zweites Materialstück und die Verbindungsstücke

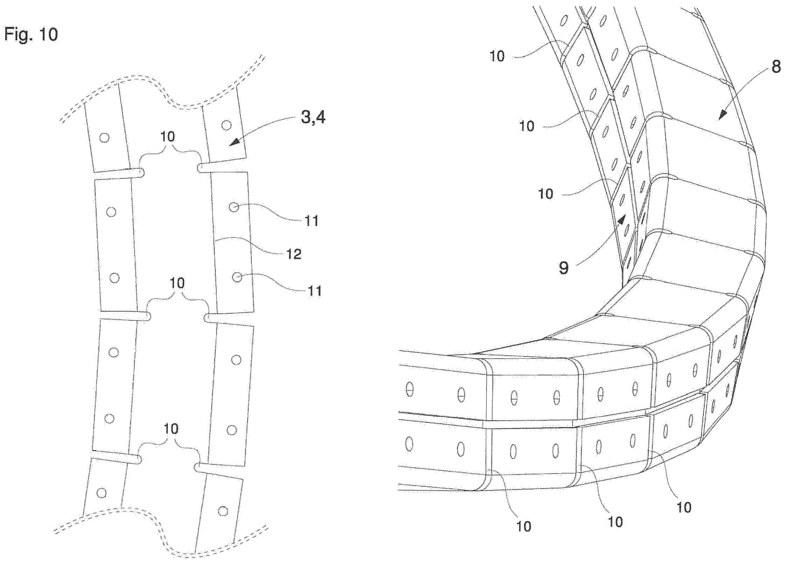

- Fig. 10: einen Freistellungsbereich angrenzender Loftflächen im Bereich eines noch flachen Materialstücks und diesen Freistellungsbereich in einem verdrehten und tordierten Zustand des dann abgekanteten und mit einem zweiten Materialstück verbundenen Materialstücks
- Fig. 11a,b: eine Anordnung aus erfindungsgemäßen Tragstrukturen in perspektivischer Ansicht
- Fig. 12: verschiedene Beispiele für mögliche polygonale Querschnitte
- Fig. 13 - 20: alternativ zu den Fig. 1 - 8 das erfindungsgemäße Verfahren mit dreieckigen polygonalen Querschnitten statt mit viereckigen polygonalen Querschnitten
- Fig. 21: eine alternative Art der Verbindung der dreieckigen polygonalen Querschnitte mittels Verbindungsstücken
- Fig. 22: ein Beispiel des Verfahrensschrittes J für das Ausführungsbeispiel der Fig. 1 bis 9

Um die Übersichtlichkeit der Darstellung zu gewährleisten, sind nicht in allen Figuren alle an sich vorkommenden Bezugszeichen eingezeichnet.

Im folgenden wird beispielhaft ein erfindungsgemäßes Verfahren zur Herstellung einer in einer dreidimensionalen, beliebig gekrümmten Geometrie 2 verlaufenden Tragstruktur 1 aus einem ersten und einem zweiten flachen Materialstück 3, 4 beschrieben, wobei die Geometrie 2 Krümmungen in drei zueinander orthogonale Richtungen aufweist.

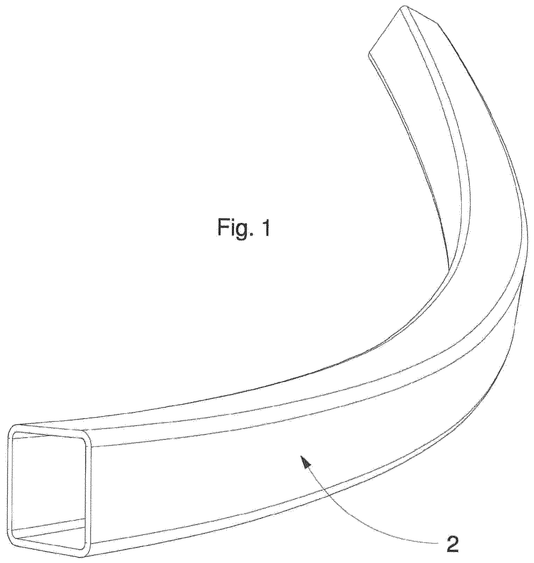

In einem ersten Schritt A (Fig. 1) erfolgt ein Bereitstellen der gewünschten Geometrie 2 in digitaler Form. Dieses Bereitstellen kann auf verschiedenste, dem Fachmann bekannten Weisen erfolgen, z. B. in Form von CAD-Daten, in Form von Voxel-Daten usw.

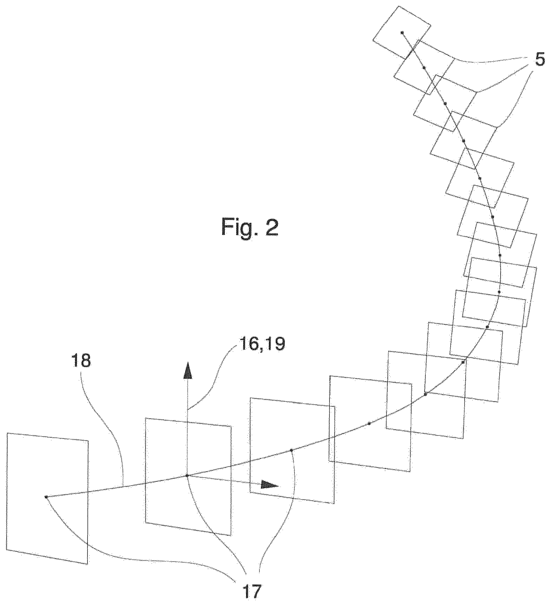

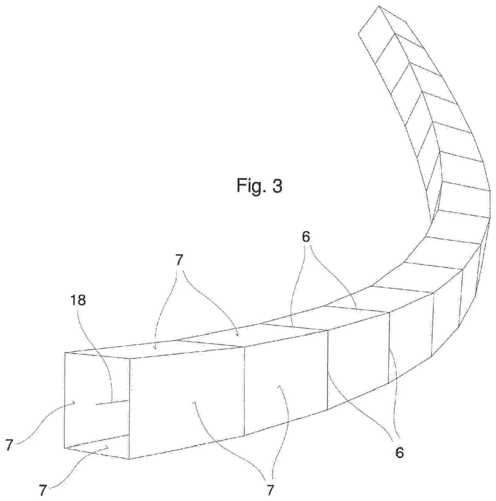

In einem zweiten Schritt B erfolgt ein Approximieren der gewünschten Geometrie 2 durch Ermitteln einer Vielzahl von polygonalen Querschnitten 5 entlang einer Leitkurve 18 der Geometrie 2 (Fig. 2) und Verbinden der Seitenlinien 6 aufeinander folgender polygonaler Querschnitte 5 durch Loftflächen 7 (Fig. 3). Das Approximieren der gewünschten Geometrie 2 und das Verbinden der Seitenlinien 6 aufeinander folgender polygonaler Querschnitte 5 durch Loftflächen 7 kann mittels Standardwerkzeugbefehlen eines CAD-Programms manuell oder automatisiert erfolgen. Als polygonale Querschnitte 5 können - wie dargestellt Vierecke - zum Einsatz kommen, aber auch Dreiecke, Sechsecke usw.

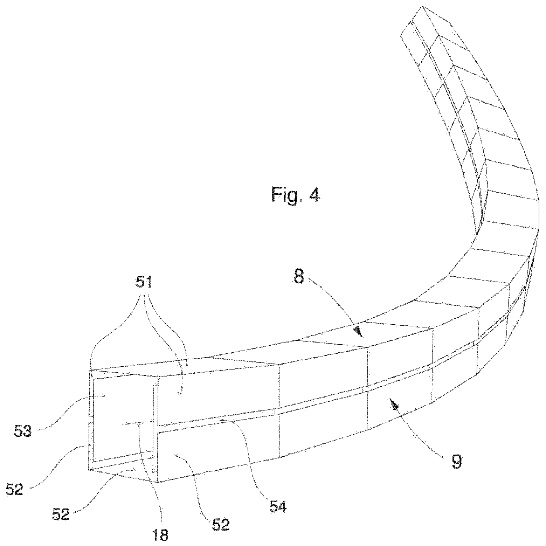

In einem weiteren Schritt C (Fig. 4) erfolgt ein Aufteilen der Geometrie 2 in wenigstens einen ersten und einen zweiten Teil 8, 9, welche entlang zumindest eines Abschnitts der Erstreckung der Geometrie 2 verlaufen. In Bezug auf die polygonalen Querschnitte 5 erfolgt die Aufteilung so, dass die einzelnen Seitenlinien 6 des polygonalen Querschnitts 5 rechnerisch aufgeteilt werden und zwar so, dass zwischen angrenzenden Seitenlinien 6 ein Überstand oder eine Überlappung entsteht, welche später ein Verbinden der geschnitten Materialstücke gestattet. Beim gezeigten viereckigen polygonalen Querschnitt 5 entstehen so die dargestellten Einzelflächen 51 bis 54. Der in der Fig. 4 obere, erste Teil 8 wird durch die Einzelfläche 51 gebildet. Der in der Fig. 4 untere, zweite Teil 9 wird durch die Einzelfläche 52 gebildet. Die in der Fig. 4 seitlich verlaufenden Einzelflächen 53, 54 dienen später der Verbindung des ersten und zweiten Teils 8, 9. Alternativ könnten natürlich auch die Einzelflächen 53, 54 als erster bzw. zweiter Teil 8, 9 angesehen werden, dann dienen die Einzelflächen 51 und 52 der Verbindung. Wiederum alternativ könnten die Einzelflächen 52 und 54 oder 51 und 53 auch weg gelassen werden und die spätere Verbindung des ersten und zweiten Teils 8, 9 kann durch versetztes Anordnung dieser Teile 8, 9 und unmittelbarer Befestigung aneinander oder durch Vorsehen von gesonderten, einzelnen Verbindungsstücken erfolgen.

Im dargestellten, bevorzugten Ausführungsbeispiel eines erfindungsgemäßen Verfahrens ist vorgesehen, dass eine Aufteilung der Geometrie 2 in den wenigstens einen ersten und wenigstens einen zweiten Teil 8, 9 in Form von entlang der Erstreckung der Geometrie 2 verlaufende Schalen vorgenommen wird, die durch Längsstreifen miteinander verbunden werden.

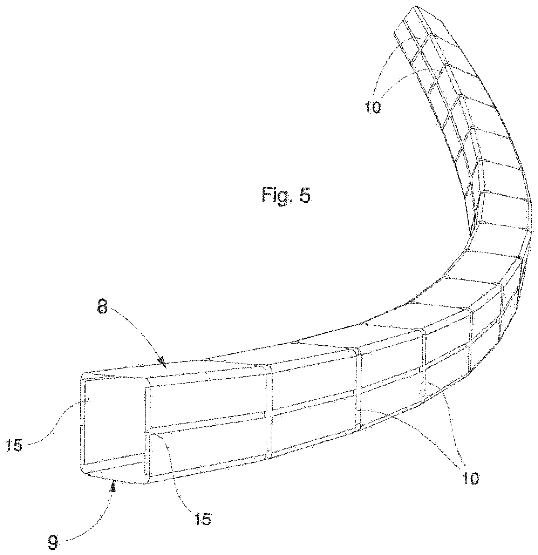

In einem weiteren Schritt D (Fig. 5) erfolgt ein Festlegen wenigstens eines Freistellungsbereichs 10 angrenzender Loftflächen 7 im Bereich jedes polygonalen Querschnitts 5 (in der Fig. 5 verlaufen die Freistellungsbereiche 10 z. B. im vorderen Bereich annähernd vertikal). Die Freistellungsbereiche 10 erfüllen im Wesentlichen zwei Funktionen. Zum einen ermöglichen sie das Abkanten der vorher flachen ersten und Materialstücke 3, 4. Zum anderen gestatten sie ein Tordieren der später abgekanteten ersten und zweiten Materialstücke 13, 14. Die Freistellungsbereiche 10 verlaufen über einen Eckbereich der polygonalen Querschnitte 5. Die Breite der Freistellungsbereiche 10 können variabel gestaltet werden. Je größer die lokale Krümmung, desto breiter sollte der lokale Freistellungsbereich 10 ausgebildet sein. Die einzelnen Segmente des ersten und zweiten Teils 8, 9 bleiben in den in Fig. 5 oberen und unteren Bereichen miteinander verbunden. Dies ist allerdings nicht zwingend erforderlich.

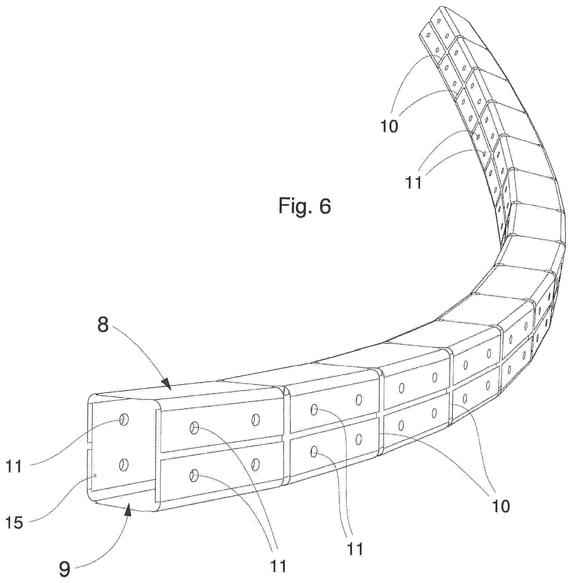

In einem weiteren Schritt E (Fig. 6) erfolgt ein Festlegen einer Vielzahl von am ersten und zweiten Teil 8, 9 angeordneten Verbindungsstellen 11 entlang der Erstreckung des ersten und einen zweiten Teils 8, 9, zur späteren Verbindung des wenigstens einen ersten und einen zweiten Teils 8, 9. Die Verbindungsstellen 11 sind im gezeigten Beispiel in Form von Löchern zum späteren Einführen von Nieten, Bolzen, Schrauben oder dergleichen ausgebildet. Alternativ könnte es sich bei den Verbindungsstellen 11 auch um Schweißpunkte oder Klebepunkte oder Schweißnähte oder Klebenähte (linienförmig ausgebildete Verbindungsstellen 11) handeln.

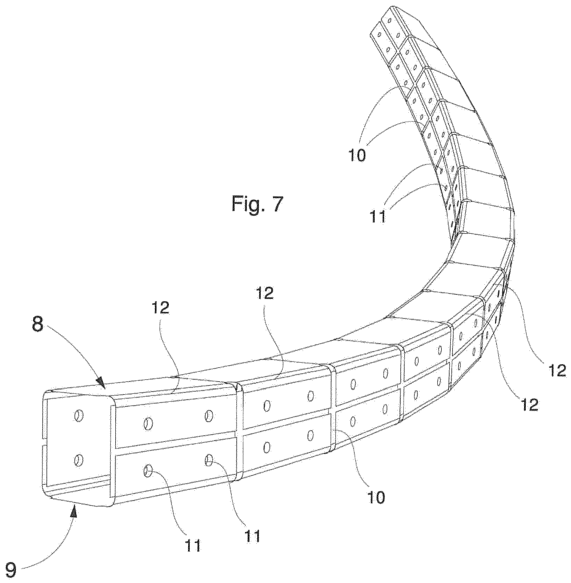

In einem weiteren Schritt F (Fig. 7) erfolgt ein Festlegen von zwischen den polygonalen Querschnitten 5 verlaufenden Abkantkanten 12. Dies kann mittels Standardwerkzeugbefehlen eines CAD-Programms manuell oder automatisiert erfolgen.

In einem weiteren Schritt G erfolgt ein Abwickeln des wenigstens einen ersten und einen zweiten Teiles 8, 9, welche mit den Freistellungsbereichen 10 und Verbindungsstellen 11 versehen sind und Erstellen einer Schnittkontur für den wenigstens einen ersten und einen zweiten Teil 8, 9, wobei eine der in drei zueinander orthogonale Richtungen vorliegenden Krümmungen in den Schnittkonturen abgebildet ist. Dies kann mittels Standardwerkzeugbefehlen eines CAD-Programms manuell oder automatisiert erfolgen.

Die bisher beschriebenen Verfahrensschritte können rein elektronisch durchgeführt werden und stellen den Planungsteil des erfindungsgemäßen Verfahrens dar. Diese Verfahrensschritte können in einem erfindungsgemäßen Computerprogrammprodukt kodiert werden. Die Schnittkonturen als Ergebnis der bisherigen Verfahrensschritte A bis G sind in elektronischer Form oder auf sonstige geeignete Weise für den Vorgang des Zuschneidens bereitzustellen. Die Schritte H bis J stellen den Produktions- oder Fertigungsteil des erfindungsgemäßen Verfahrens dar und können mit einer erfindungsgemäßen Fertigungsanlage durchgeführt werden.

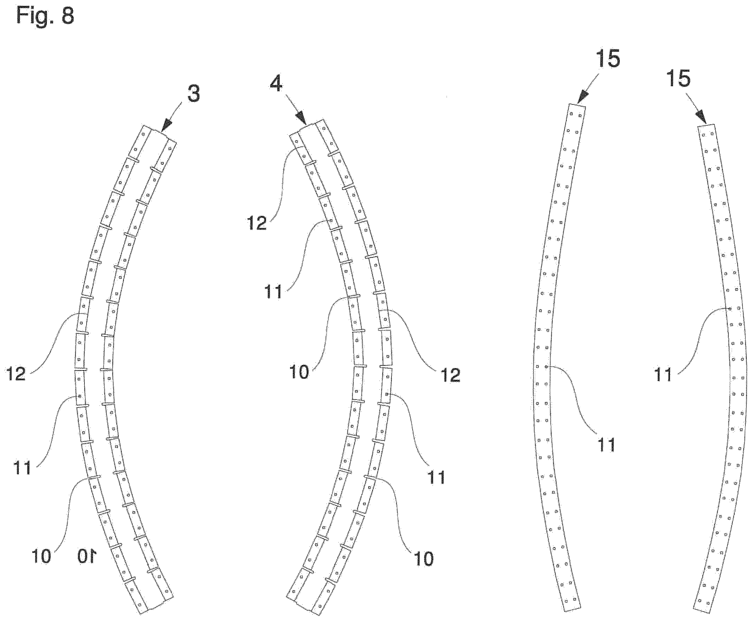

Im Schritt H erfolgt ein Zuschneiden wenigstens eines ersten und eines zweiten flachen Materialstückes 3, 4 gemäß der Schnittkonturen in Bezug auf den wenigstens einen ersten und einen zweiten Teil 8, 9. Das Zuschneiden kann manuell oder auf automatisierten Schneideanlagen durchgeführt werden und führt zu den in Fig. 8 gezeigten zugeschnittenen ersten und zweiten flachen Materialstücken 3, 4 und flächigen Verbindungsstücken 15. Zu beachten ist, dass in der vorliegenden Offenbarung der Begriff "Zuschneiden" synonym für "Schneiden", "Stanzen", "Scheren", "Lasern" usw. verwendet wird.

In einem weiteren Schritt I erfolgt ein Abkanten der zugeschnittenen ersten und zweiten flachen Materialstücke 3, 4 entlang der Abkantkanten 12 zu einem abgekanteten ersten Materialstück 13 und einem abgekanteten zweiten Materialstück 14. Die flächigen Verbindungsstücke 15 müssen im gezeigten Beispiel natürlich nicht abgekantet werden und bleiben flach.

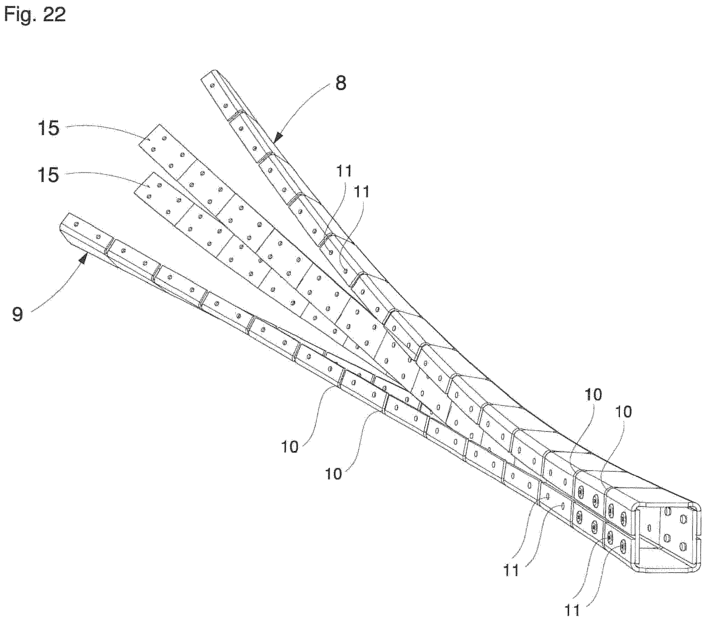

In einem weiteren Schritt J (vgl. Fig. 22) erfolgt ein Verbinden des abgekanteten ersten Materialstückes 13 und des abgekanteten zweiten Materialstückes 14 entlang der Verbindungsstellen 11, wobei ein durch die Freistellungsbereiche 10 gestattetes Verdrehen und/oder Tordieren aneinander angrenzender Bereiche des abgekanteten ersten Materialstückes 13 und des abgekanteten zweiten Materialstückes 14 zur Abbildung der restlichen zwei der in drei zueinander orthogonalen Richtungen vorliegenden Krümmungen erfolgt und wobei die verdrehten und/oder tordierten abgekanteten ersten und abgekanteten zweiten Materialstücke 13, 14 durch das Verbinden fixiert werden. Das Verbinden erfolgt bevorzugt manuell.

Im dargestellten Ausführungsbeispiel eines erfindungsgemäßen Verfahrens ist vorgesehen, dass die polygonalen Querschnitte 5 aus Polygonen mit geradzahliger Ordnung (Ordnung gleich Vier) gebildet werden und wenigstens zwei Freistellungsbereiche 10 an einander gegenüber liegenden Seitenlinien 6 der polygonalen Querschnitte 5 gewählt werden. Wie später gezeigt, können aber natürlich auch Polygone mit ungeradzahliger Ordnung (z. B. Ordnung gleich Drei) zum Einsatz kommen. Generell ist bevorzugt vorgesehen, im Fall von Polygonen mit geradzahliger Ordnung einen Teil 53, 54 der Einzelflächen 51, 52, 53, 54 als Verbindungsteile für die restlichen Einzelflächen 51, 52 zu verwenden und im Fall von Polygonen mit ungeradzahliger Ordnung die Einzelflächen 51, 52, 53 unmittelbar (ggf. über Fortsätze) aneinander zu verbinden.

Im dargestellten, bevorzugten Ausführungsbeispiel eines erfindungsgemäßen Verfahrens ist vorgesehen, dass ein Verbinden des abgekanteten ersten Materialstückes 13 und des abgekanteten zweiten Materialstückes 14 mittels der Verbindungsstellen 11 durch zumindest über wenigstens einen Abschnitt der Erstreckung der Geometrie 2 verlaufendes Verbindungsstück 15 erfolgt. Dies ist allerdings - wie oben beschrieben - nicht unbedingt erforderlich.

Im dargestellten, bevorzugten Ausführungsbeispiel eines erfindungsgemäßen Verfahrens ist vorgesehen, dass das Verbinden an der Vielzahl von Verbindungsstellen 11 in Form von Nietverbindungen und/oder Schraubverbindungen und/oder Schweißverbindungen und/oder Klebeverbindungen erfolgt.

Im dargestellten, bevorzugten Ausführungsbeispiel eines erfindungsgemäßen Verfahrens ist vorgesehen, dass die polygonalen Querschnitte 5 so ermittelt werden, dass eine Flächennormale 16 jedes polygonalen Querschnitts 5 parallel zur an einem Durchstoßungspunkt 17 des polygonalen Querschnitts 5 und der Leitkurve 18 vorliegenden Tangente 19 der Leitkurve 18 verläuft.

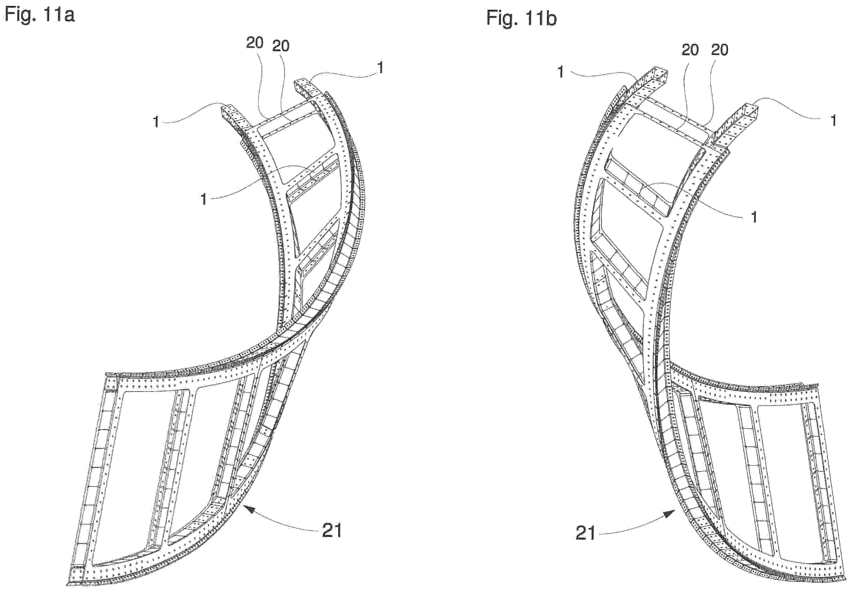

Durch das beschriebene Verfahren entsteht eine Tragstruktur 1, welche eine in einer dreidimensionalen gekrümmten Geometrie 2 verläuft und im gezeigten Ausführungsbeispiel aus einem ersten und einem zweiten abgekanteten Materialstück 13, 14 besteht, wobei die Geometrie 2 Krümmungen in drei zueinander orthogonale Richtungen aufweist (vgl. Fig. 11).

Das abgekantete erste Materialstück 13 und das abgekantete zweite Materialstück 14 weisen durch Schnitte entlang von Schnittkonturen hergestellte Freistellungsbereiche 10 auf, wobei eine der in drei zueinander orthogonale Richtungen vorliegenden Krümmungen in den Schnittkonturen (also bereits im flachen Zustand der Materialstücke 13, 14) abgebildet ist.

Das abgekantete erste Materialstück 13 und das abgekantete zweite Materialstück 14 sind entlang einer Vielzahl von Verbindungsstellen 11 miteinander verbunden und ein durch die Freistellungsbereiche 10 gestattetes Verdrehen und/oder Tordieren aneinander angrenzender Bereiche des abgekanteten ersten Materialstückes 13 und des abgekanteten zweiten Materialstückes 14 bildet die restlichen zwei der in drei zueinander orthogonale Richtungen vorliegenden Krümmungen ab.

Die verdrehten und/oder tordierten abgekanteten Materialstücke 13, 14 sind in ihrer verdrehten und/oder tordierten Form durch das Verbinden fixiert.

Fig. 11a,b zeigt in Vorder- und Rückansicht eine Anordnung 21 aus Tragstrukturen 1, welche im gezeigten Beispiel zwei parallel verlaufende, gebogen und tordiert ausgebildete Längsträger aufweist, welche durch Querstreben und zwei beabstandet zueinander an den Längsträgern befestigten Deckflächen 20 verbunden werden. Längsträger und Querstreben werden gemäß dem erfindungsgemäßen Verfahren hergestellt.

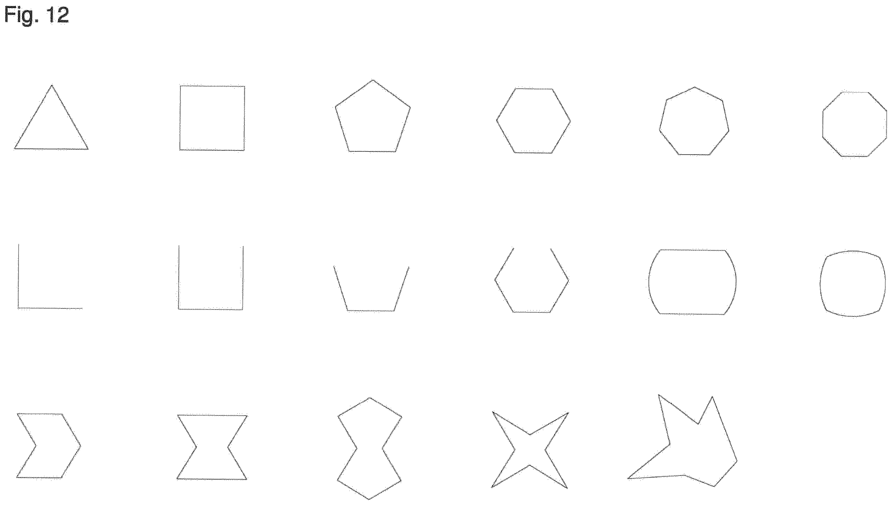

Die Fig. 12 zeigt verschiedene Beispiele für mögliche polygonale Querschnitte 5.

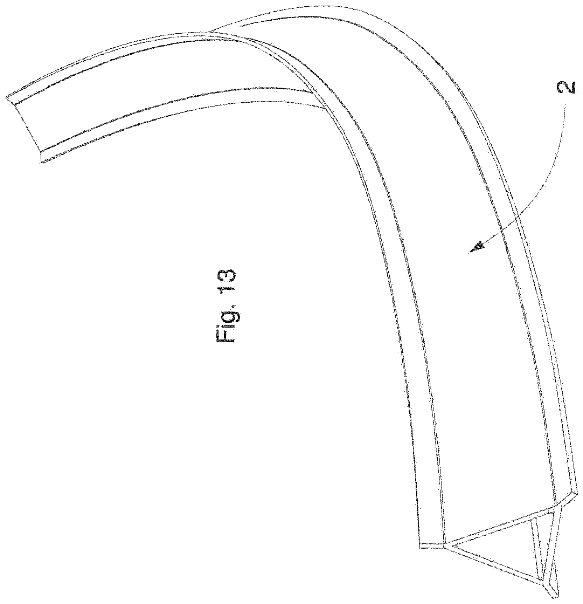

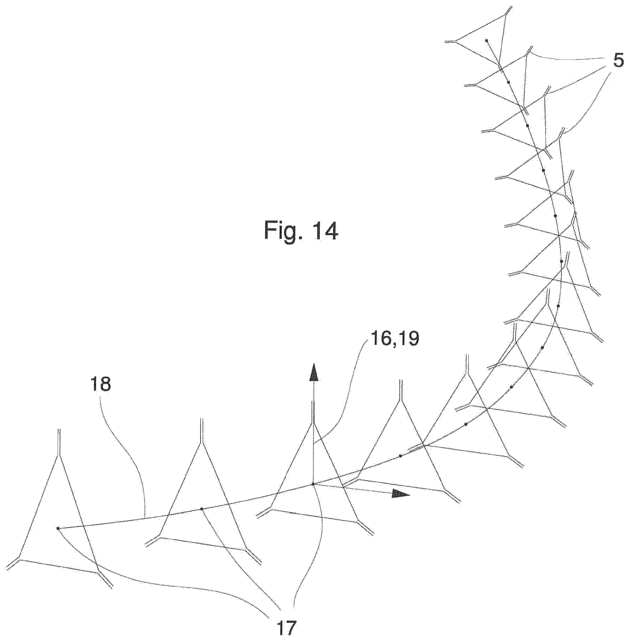

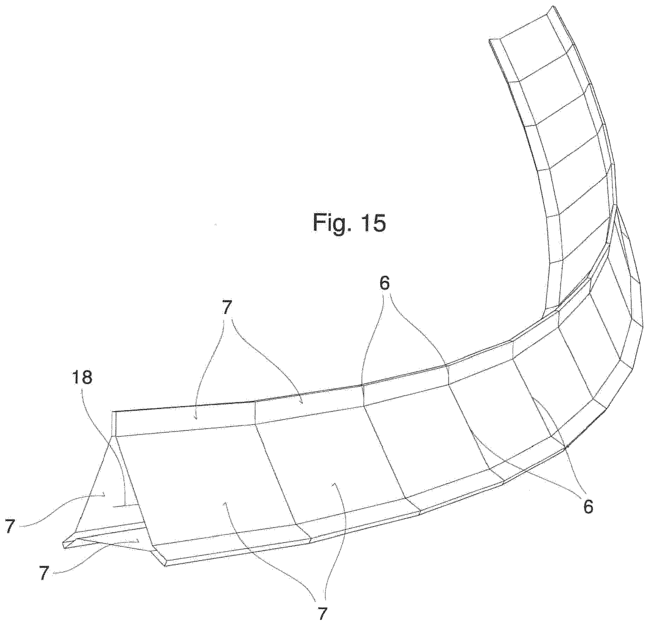

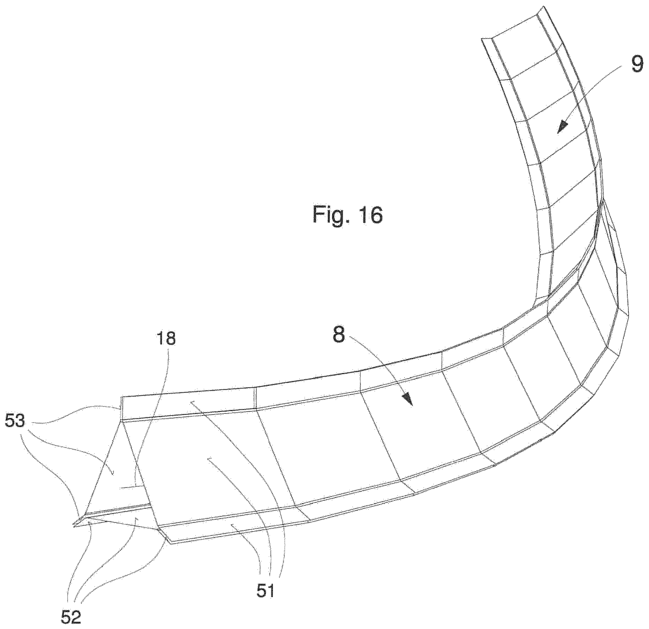

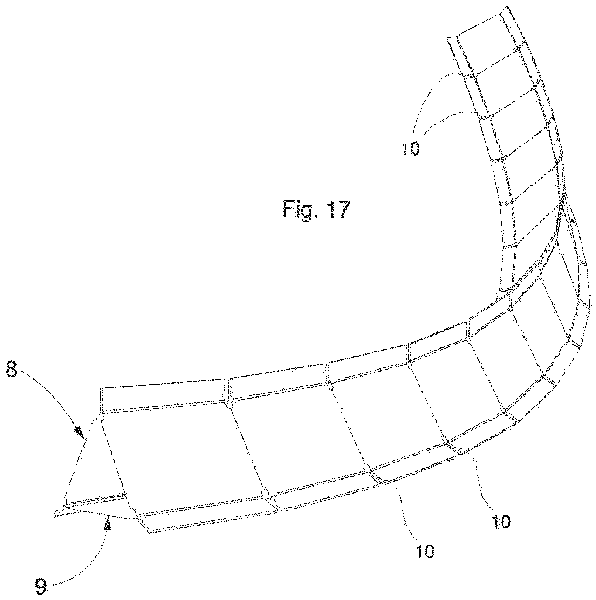

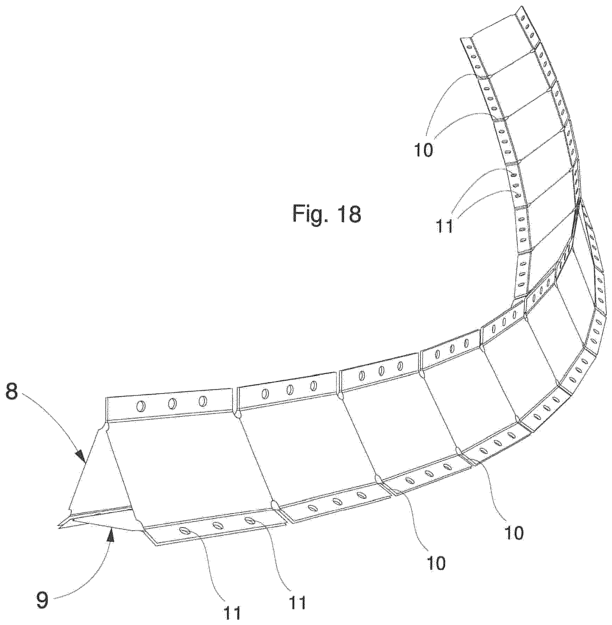

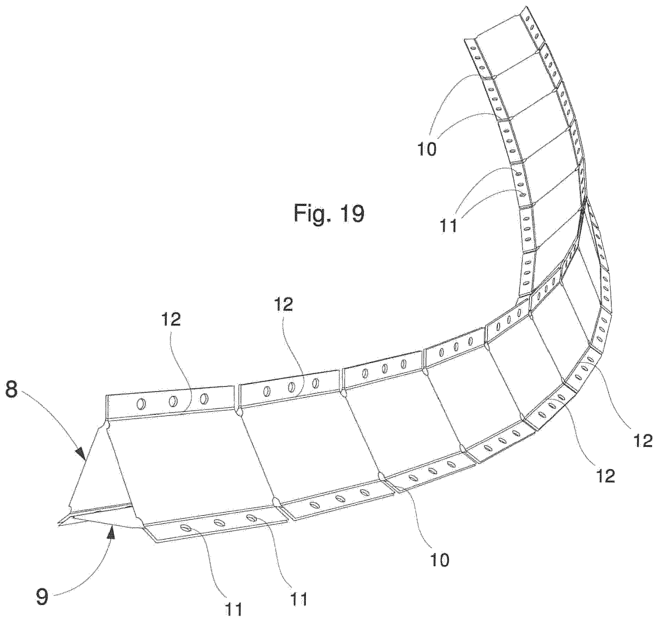

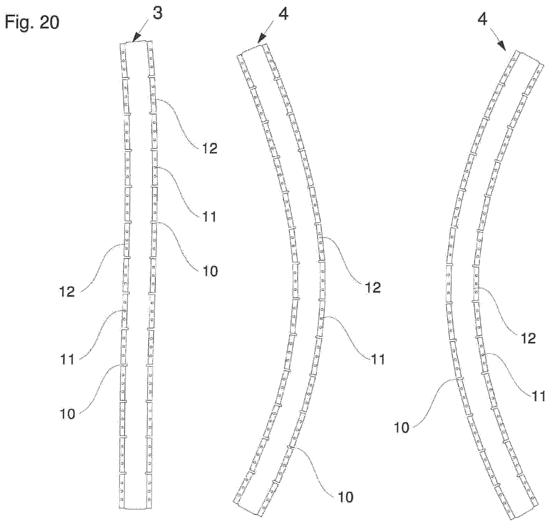

In den Fig. 13-20 ist beispielhaft alternativ zu den Fig. 1 - 8 das erfindungsgemäße Verfahren mit dreieckigen polygonalen Querschnitten 5 statt mit viereckigen polygonalen Querschnitten 5 dargestellt.

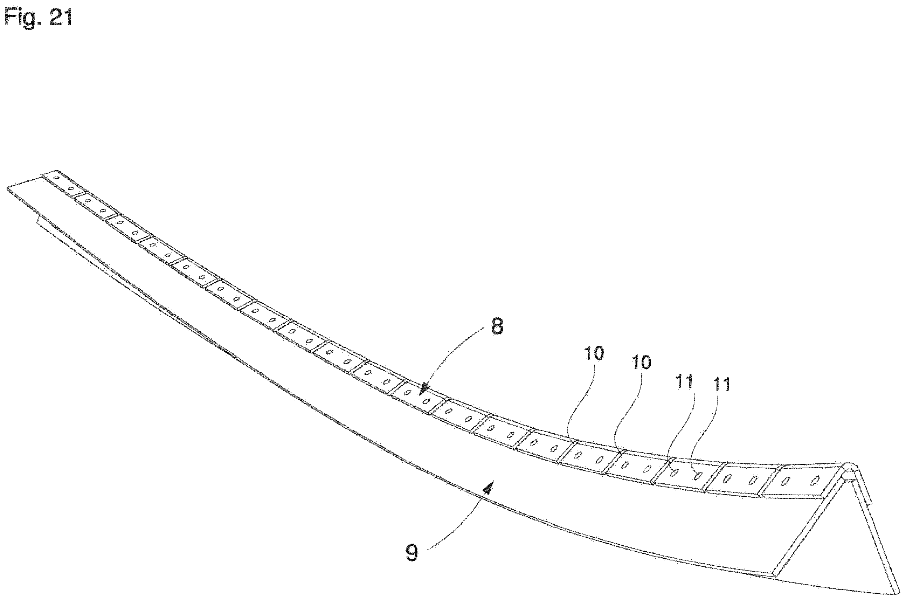

Fig. 21 zeigt wiederum eine alternative Art der Verbindung der dreieckigen polygonalen Querschnitte 5 (mittels Verbindungsstücken 15).

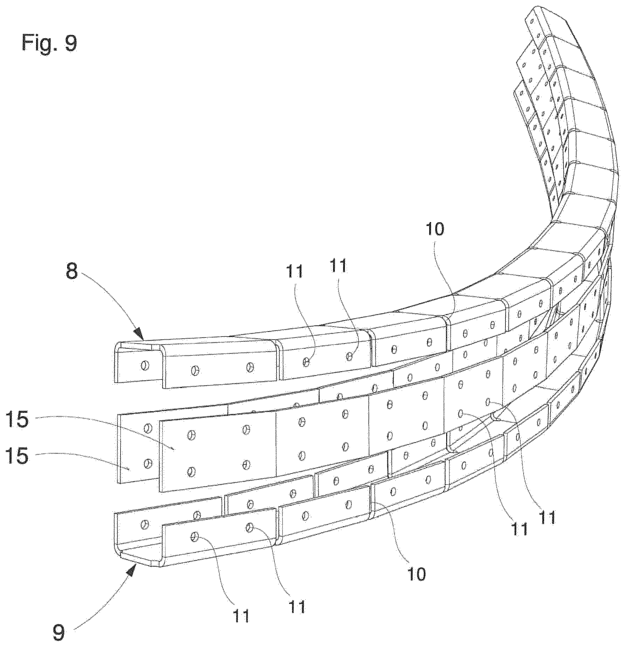

Fig. 22 zeigt beispielhaft für das Ausführungsbeispiel der Fig. 1 bis 9 den Verfahrensschritt J. Die in Fig. 22 beiden vordersten Segmente sind bereits durch Nieten miteinander verbunden und so in ihrer tordierten und gebogenen Lage festgestellt. Die restlichen Segmente werden fortlaufend verbunden.

### Bezugszeichenliste:

- 1: Tragstruktur
- 2: Geometrie
- 3: erstes flaches Materialstück
- 4: zweites flaches Materialstück
- 5: polygonaler Querschnitt
51 Einzelfläche
52 Einzelfläche
53 Einzelfläche
54 Einzelfläche
- 6: Seitenlinie eines polygonalen Querschnitts
- 7: Loftfläche
- 8: erster Teil der Geometrie
- 9: zweiter Teil der Geometrie
- 10: Freistellungsbereich angrenzender Loftflächen
- 11: Verbindungsstelle
- 12: Abkantkante
- 13: abgekantetes erstes Materialstück
- 14: abgekantetes zweites Materialstück
- 15: Verbindungsstück
- 16: Flächennormale
- 17: Durchstoßungspunkt
- 18: Leitkurve
- 19: Tangente der Leitkurve im Durchstoßungspunkt
- 20: Deckflächen
- 21: Anordnung

## Patentansprüche

1. Verfahren zur Herstellung einer in einer dreidimensionalen, beliebig gekrümmten Geometrie (2) verlaufenden Tragstruktur (1) aus wenigstens einem ersten und einem zweiten flachen Materialstück (3, 4), wobei die Geometrie (2) Krümmungen in drei zueinander orthogonalen Richtungen aufweist, mit zumindest folgenden Schritten:
A. Bereitstellen der gewünschten Geometrie (2) in digitaler Form
B. Approximieren der gewünschten Geometrie (2) durch Ermitteln einer Vielzahl von polygonalen Querschnitten (5) entlang einer Erstreckung der Geometrie (2) und Verbinden der Seitenlinien (6) aufeinander folgender polygonaler Querschnitte (5) durch Loftflächen (7)
C. Aufteilen der Geometrie (2) in wenigstens einen ersten und einen zweiten Teil (8, 9), welche entlang zumindest eines Abschnitts der Erstreckung der Geometrie (2) verlaufen
D. Festlegen wenigstens eines Freistellungsbereichs (10) angrenzender Loftflächen (7) im Bereich jedes polygonalen Querschnitts (5)
E. Festlegen einer Vielzahl von am wenigstens einen ersten und einen zweiten Teil (8, 9) angeordneter Verbindungsstellen (11) entlang der Erstreckung des wenigstens einen ersten und einen zweiten Teils (8, 9), zur späteren Verbindung des wenigstens einen ersten und einen zweiten Teils (8, 9)
F. Festlegen von zwischen den polygonalen Querschnitten (5) verlaufenden Abkantkanten (12)
G. Abwickeln des wenigstens einen ersten und einen zweiten Teiles (8, 9), welche mit den Freistellungsbereichen (10) und Verbindungsstellen (11) versehen sind und Erstellen einer Schnittkontur in Bezug auf den wenigstens einen ersten und einen zweiten Teil (8, 9), wobei eine der in drei zueinander orthogonale Richtungen vorliegenden Krümmungen in den Schnittkonturen abgebildet ist
H. Zuschneiden wenigstens eines ersten und eines zweiten flachen Materialstückes (3, 4) gemäß der Schnittkonturen in Bezug auf den wenigstens einen ersten und einen zweiten Teil (8, 9)
I. Abkanten der zugeschnittenen wenigstens einen ersten und einen zweiten flachen Materialstücke (3, 4) entlang der Abkantkanten (12) zu wenigstens einem abgekanteten ersten Materialstück (13) und wenigstens einem abgekanteten zweiten Materialstück (14)
J. Verbinden des wenigstens einen abgekanteten ersten Materialstückes (13) und des wenigstens einen abgekanteten zweiten Materialstückes (14) entlang der Verbindungsstellen (11), wobei ein durch die Freistellungsbereiche (10) gestattetes Verdrehen und/oder Tordieren aneinander angrenzender Bereiche des wenigstens einen abgekanteten ersten Materialstückes (13) und des wenigstens einen abgekanteten zweiten Materialstückes (14) zur Abbildung der restlichen zwei der in drei zueinander orthogonale Richtungen vorliegenden Krümmungen erfolgt und wobei die verdrehten und/oder tordierten wenigstens einen abgekanteten ersten und einen abgekanteten zweiten Materialstücke (13, 14) durch das Verbinden fixiert werden.

2. Verfahren nach Anspruch 1, wobei die polygonalen Querschnitte (5) aus Polygonen mit geradzahliger Ordnung gebildet werden und im Schritt D wenigstens zwei Freistellungsbereiche (10) an einander gegenüber liegenden Seitenlinien (6) der polygonalen Querschnitte (5) gewählt werden.

3. Verfahren nach wenigstens einem der vorangehenden Ansprüche, wobei im Schritt C eine Aufteilung der Geometrie (2) in den wenigstens einen ersten und wenigstens einen zweiten Teil (8, 9) in Form von entlang der Erstreckung der Geometrie (2) verlaufenden Schalen vorgenommen wird.

4. Verfahren nach wenigstens einem der vorangehenden Ansprüche, wobei ein Verbinden des wenigstens einen abgekanteten ersten Materialstückes (13) und des wenigstens einen abgekanteten zweiten Materialstückes (14) mittels der Verbindungsstellen (11) durch zumindest über wenigstens einen Abschnitt der Erstreckung der Geometrie (2) verlaufendes Verbindungsstück (15) erfolgt.

5. Verfahren nach wenigstens einem der vorangehenden Ansprüche, wobei im Schritt J das Verbinden an der Vielzahl von Verbindungsstellen (11) in Form von Nietverbindungen und/oder Schraubverbindungen und/oder Schweißverbindungen und/oder Klebeverbindungen erfolgt.

6. Verfahren nach wenigstens einem der vorangehenden Ansprüche, wobei im Schritt B die polygonalen Querschnitte (5) so ermittelt werden, dass eine Flächennormale (16) jedes polygonalen Querschnitts (5) parallel zur an einem Durchstoßungspunkt (17) des polygonalen Querschnitts (5) und der Leitkurve (18) vorliegenden Tangente (19) der Leitkurve (18) verläuft.

7. Computerprogrammprodukt, umfassend Befehle, die bei der Ausführung des Programms durch einen Computer diesen veranlassen, wenigstens die Schritte B bis G des Verfahrens nach wenigstens einem der Ansprüche 1 bis 6 auszuführen.

## Claims

1. A method of producing a carrier structure (1) which extends in a three-dimensional geometry (2) of any desired curvature and which comprises at least one first and one second flat piece of material (3, 4), wherein the geometry (2) has curvatures in three mutually orthogonal directions, having at least the following steps:
A. providing the desired geometry (2) in digital form,
B. approximating the desired geometry (2) by determining a plurality of polygonal cross sections (5) along an extent of the geometry (2) and connecting the side lines (8) of mutually successive polygonal cross-sections (5) by loft surfaces (7),
C. dividing the geometry (2) into at least one first and one second part (8, 9) which run along at least one part of the extent of the geometry (2),
D. specifying at least one clearance area (10) of adjoining loft surfaces (7) in the area of each polygonal cross section (5),
E. specifying a plurality of junctions (11) arranged at the at least one first and one second part (8, 9) along the extent of the at least one first and one second part (8, 9) in order to later connect the at least one first and one second part (8, 9),
F. specifying bevel edges (12) extending between the polygonal cross sections (5),
G. unwinding the at least one first and one second part (8, 9) which are provided with the clearance areas (10) and junctions (11) and producing a cut contour in relation to the at least one first and one second part (8, 9), wherein one of the curvatures located in three mutually orthogonal directions is represented in the cut contours,
H. cutting at least one first and one second flat piece of material (3, 4) in accordance with the cut contours in relation to the at least one first and one second part (8, 9),
I. beveling the cut at least one first and one second flat pieces of material (3, 4) along the bevel edges (12) resulting in at least one beveled first piece material (13) and at least one beveled second piece of material (14), and
J. connecting the at least one beveled first piece of material (13) and the at least one beveled second piece of material (14) along the junctions (11), wherein a rotating and/or twisting procedure (10) of mutually adjoining areas of the at least one beveled first piece of material (13) and the at least one beveled second piece of material (14) permitted by the clearance areas is effected to represent the remaining two of the curvatures present in three mutually orthogonal directions and wherein the rotated and/or twisted at least one beveled first and one beveled second piece of material (13, 14) are fixed by the connecting step.

2. The method pursuant to claim 1 wherein the polygonal cross sections (5) are formed with polygons of even-numbered order and in step D at least two clearance areas (10) are selected at opposite side lines (6) of the polygonal cross sections (5).

3. The method pursuant to at least one of the preceding claims, wherein in step C the geometry (2) is divided into the at least one first and at least one second part (8, 9) in the form of shells running along the extent of the geometry (2).

4. The method pursuant to at least one of the preceding claims, wherein a connection of the at least one beveled first piece of material (13) and the at least one beveled second piece of material (14) is effected by means of the junctions (11) by a connecting piece (15) running at least through at least one part of the extent of the geometry (2).

5. The method pursuant to at least one of the preceding claims wherein in step J the connection procedure is made at the plurality of junctions (11) in the form of rivet connections and/or screw connections and/or weld connections and/or adhesive connections.

6. The method pursuant to at least one of the preceding claims wherein in step B the polygonal cross sections (5) are determined in such way that a surface normal (16) of each polygonal cross section runs parallel to the tangent (19) of the directrix (18) that is located at a piercing point (17) of the polygonal cross section (5) and the directrix (18).

7. A computer program product including commands which when executing the program by a computer cause the same to carry out steps B to G of the method according to at least one of claims 1 to 6.

## Revendications

1. Procédé servant à fabriquer une structure porteuse (1) s'étendant en une géométrie (2) tridimensionnelle à incurvation quelconque, composée d'au moins une première et une deuxième pièce de matériau plate (3, 4), dans lequel la géométrie (2) présente des incurvations dans trois directions orthogonales les unes par rapport aux autres, **caractérisé par** au moins des étapes suivantes:
A. la fourniture de la géométrie (2) souhaitée sous une forme numérique,
B. d'approximation de la géométrie (2) souhaitée en déterminant une pluralité de sections transversales polygonales (5) le long d'une extension de la géométrie (2) et de liaison des lignes latérales (6) de sections transversales polygonales (5) se suivant les unes les autres par des surfaces de loft (7),
C. la division de la géométrie (2) en au moins une première et une deuxième partie (8, 9), lesquelles s'étendent le long d'au moins une section de l'extension de la géométrie (2),
D. de fixation d'au moins une zone de dégagement (10) de surfaces de loft (7) contiguës dans la zone de chaque section transversale polygonale (5),
E. la fixation d'une pluralité de points de liaison (11) disposés au niveau des au moins une première et une deuxième parties (8, 9) le long de l'extension des au moins une première et une deuxième parties (8, 9), aux fins de la liaison ultérieure des au moins une première et une deuxième parties (8, 9),
F. de fixation d'arêtes de chanfreinage (12) s'étendant entre les sections transversales polygonales (5),
G. de déroulement des au moins une première et une deuxième parties (8, 9), lesquelles sont pourvues des zones de dégagement (10) et des points de liaison (11) et de création d'un contour de coupe par rapport aux au moins une première et une deuxième parties (8, 9), dans lequel une des incurvations présentes dans trois directions orthogonales les unes par rapport aux autres est reproduite dans les contours de coupe,
H. de découpage d'au moins une première et une deuxième pièce de matériau plate (3, 4) selon les contours de coupe par rapport aux au moins une première et une deuxième parties (8, 9),
I. de chanfreinage des au moins une première et une deuxième pièces de matériau plates (3, 4) découpées le long des arêtes de chanfreinage (12) pour obtenir au moins une première pièce de matériau chanfreinée (13) et au moins une deuxième pièce de matériau chanfreinée (14),
J. de liaison de l'au moins une première pièce de matériau chanfreinée (13) et de l'au moins une deuxième pièce de matériau chanfreinée (14) le long des points de liaison (11), dans lequel une rotation et/ou une torsion, permises par les zones de dégagement (10), de zones contiguës les unes aux autres de l'au moins une première pièce de matériau chanfreinée (13) et de l'au moins une deuxième pièce de matériau chanfreinée (14) sont effectuées pour reproduire les deux incurvations restantes présentes dans trois directions orthogonales les unes par rapport aux autres et dans lequel les au moins une première et une deuxième pièces de matériau chanfreinées (13, 14) tournées et/ou tordues sont bloquées par la liaison.

2. Procédé selon la revendication 1, dans lequel les sections transversales polygonales (5) sont formées à partir de polygones d'un ordre pair et au moins deux zones de dégagement (10) sont sélectionnées lors de l'étape D au niveau de lignes latérales (6) situées en vis-à-vis les unes des autres des sections transversales polygonales (5).

3. Procédé selon au moins l'une quelconque des revendications précédentes, dans lequel, lors de l'étape C, une division de la géométrie (2) en l'au moins une première partie et l'au moins une deuxième partie (8, 9) est réalisée sous la forme de coques s'étendant le long de l'extension de la géométrie (2).

4. Procédé selon au moins l'une quelconque des revendications précédentes, dans lequel une liaison de l'au moins une première pièce de matériau chanfreinée (13) et de l'au moins une deuxième pièce de matériau chanfreinée (14) est effectuée au moyen des points de liaison (11) par au moins une pièce de liaison (15) s'étendant sur au moins une section de l'extension de la géométrie (2).

5. Procédé selon au moins l'une quelconque des revendications précédentes, dans lequel, lors de l'étape J, la liaison au niveau de la pluralité de points de liaison (11) est effectuée sous la forme de liaisons par rivetage et/ou de liaisons par vissage et/ou de liaisons par soudage et/ou de liaisons par collage.

6. Procédé selon au moins l'une quelconque des revendications précédentes, dans lequel, lors de l'étape B, les sections transversales polygonales (5) sont déterminées de telle sorte qu'une normale à la surface (16) de chaque section transversale polygonale (5) s'étend de manière parallèle par rapport à la tangente (19), présente au niveau d'un point de percée (17) de la section transversale polygonale (5) et de la courbe de guidage (18), de la courbe de guidage (18).

7. Produit programme d'ordinateur, comprenant des instructions qui, lors de l'exécution du programme par un ordinateur, amènent celui-ci à exécuter au moins les étapes B à G du procédé selon au moins l'une quelconque des revendications 1 à 6.
